# EUROPEAN PATENT APPLICATION

(11) **EP 4 714 736 A1**
(43) Date of publication of application: **25.03.2026**
(21) Application number: 25204316.1
(22) Date of filing: 24.09.2025
(51) Int. Cl.: B60N 2/28

(54) **HEADREST HEIGHT ADJUSTMENT MECHANISM AND SAFETY SEAT COMPRISING SAME**

(30) Priority: 24.09.2024 CN 202422327362 U
(71) Applicant: Max-Inf (Ningbo) Baby Product Co., Ltd., Ningbo City, Zhejiang Province 315000 (CN)
(72) Inventor: CAO, Wenyong, Ningbo City, 315000 (CN); LIU, Wei, Ningbo City, 315000 (CN)
(74) Representative: Lorenz Seidler Gossel Part. mbB

(57) **Abstract**

The present invention discloses a headrest height adjustment mechanism and a safety seat including the same. The headrest height adjustment mechanism includes a seat back and a headrest adjustably arranged on the seat back. A headrest support member is further arranged on the seat back. The headrest support member is located between the seat back and the headrest. The headrest support member includes a connection end surface and a supporting end surface opposite to the connection end surface. The connection end surface is configured to press against the seat back. The supporting end surface is configured to press against the headrest. The headrest support member is configured to limit the headrest from swinging backward relative to the seat back. In the headrest height adjustment mechanism provided by the present invention, the headrest support member is arranged between the headrest and the seat back, the connection end surface of the headrest support member is configured to press against the seat back, and the supporting end surface of the headrest support member is configured to press against the headrest. As such, the headrest support member can support the headrest to limit the headrest from swinging backward relative to the seat back when the vehicle suddenly accelerates or decelerates, to better protect the head and the neck of a child occupant and reduce the probability of injury of the child occupant.

## Description

### TECHNICAL FIELD

The present invention relates to the technical field of child safety seats, and specifically to a headrest height adjustment mechanism and a safety seat including the same.

### BACKGROUND

A child safety seat is a safety device specially designed for children of different ages or body shapes, and can be installed in a vehicle by an International Standards Organization FIX (ISOFIX) component, to effectively improve the safety of child occupants. To improve the riding comfort and safety during use, the support and containment performance of the seat body is particularly taken into consideration during designing of child safety seats. Generally, a child safety seat is equipped with a headrest to better protect the head of a child occupant. The headrest is arranged above the seat body and is designed in a U-shape. Most headrests are padded with a thick cushioning material in the central head cushion and the side wings.

To adapt to children of different heights, headrests of the existing child safety seats are generally designed to be vertically adjustable in height. A user can adjust the headrest to different heights according to specific conditions of different child occupants to better protect the heads of the child occupants. However, headrest height adjustment mechanisms in the existing child safety seats inevitably lead to a gap between the headrest and the seat back. As a result, when the vehicle suddenly accelerates or decelerates, the headrest will swing backward relative to the seat back. Especially when the height of the headrest is adjusted to a high level, part of the headrest is higher than the seat back. In this case, once the vehicle suddenly accelerates or decelerates, the headrest will swing backward relative to the seat back more violently, the head and the neck of a child occupant cannot be well supported and protected, and the child occupant is easily injured.

### SUMMARY

An objective of the present invention is to provide a headrest height adjustment mechanism to solve the problem of insufficient support provided by headrests of existing safety seats.

Another objective of the present invention is to provide a safety seat including the headrest height adjustment mechanism.

To achieve the above objectives, the following technical solutions are adopted in the present invention. A headrest height adjustment mechanism is provided, including a seat back and a headrest adjustably arranged on the seat back, where a headrest support member is further arranged on the seat back, the headrest support member is located between the seat back and the headrest, the headrest support member includes a connection end surface and a supporting end surface opposite to the connection end surface, the connection end surface is configured to press against the seat back, the supporting end surface is configured to press against the headrest, and the headrest support member is configured to limit the headrest from swinging backward relative to the seat back.

In a preferred embodiment, the headrest support member includes a seat back top cover, a supporting protrusion is arranged on a front end surface of the seat back top cover, a front end surface of the supporting protrusion protrudes from the front end surface of the seat back top cover to form the supporting end surface, and the supporting end surface is configured to press against a back of the headrest to support the headrest.

In another preferred embodiment, the supporting protrusion further includes an inclined connection surface, the inclined connection surface is arranged below the supporting end surface, and two ends of the inclined connection surface are respectively connected to the supporting end surface and the front end surface of the seat back top cover, to achieve a smooth transition between the supporting end surface and the front end surface of the seat back top cover.

Further, in a preferred embodiment, two supporting protrusions are arranged on the seat back top cover, the two supporting protrusions are symmetrically arranged on the front end surface of the seat back top cover in a left-right direction, and the two supporting protrusions extend in a vertical direction of the seat back.

Further, the headrest support member further includes a supporting side plate, a first end of the supporting side plate is connected to the seat back top cover by integral molding, the supporting side plate is perpendicularly arranged on a rear end surface of the seat back top cover, a second end of the supporting side plate extends toward the seat back, a rear end surface of the second end portion forms the connection end surface, and the connection end surface is configured to press against the seat back to support the seat back top cover and the supporting protrusion.

Further, a mounting groove is provided on the seat back top cover, a threaded hole is provided on a bottom of the mounting groove, a mounting column configured to engage with the mounting groove is arranged on the seat back, an internal thread is provided on the mounting column, and the headrest support member is mounted on the seat back through engagement of a mounting bolt with the threaded hole and the internal thread.

Further, the headrest support member further includes a reinforcing rib, where the reinforcing rib is arranged at a top of the rear end surface of the seat back top cover and is located above the supporting side plate, and the reinforcing rib extends from a left end surface of the seat back top cover to a right end surface of the seat back top cover in a length direction of the seat back top cover.

Further, the reinforcing rib has a cuboid structure with a hollow interior, and four side walls of the reinforcing rib extend perpendicularly outward toward the seat back.

Further, a spacing between the supporting end surface and the front end surface of the seat back top cover ranges from 3 mm to 20 mm.

According to another aspect, the present invention further provides a safety seat, including the headrest height adjustment mechanism.

Compared with the prior art, the present invention has the following advantages.

In the headrest height adjustment mechanism provided by the present invention, the headrest support member is arranged between the headrest and the seat back, the connection end surface of the headrest support member is configured to press against the seat back, and the supporting end surface of the headrest support member is configured to press against the headrest. As such, the headrest support member may support the headrest to limit the headrest from swinging backward relative to the seat back when the vehicle suddenly accelerates or decelerates, to better protect the head and the neck of a child occupant, and reduce the probability of injury of the child occupant. In addition, the supporting protrusion does not affect the smoothness of headrest height adjustment, and may ensure a smooth headrest adjustment while supporting the headrest.

### BRIEF DESCRIPTION OF THE DRAWINGS

FIG. 1 is a schematic exploded view of a headrest height adjustment mechanism according to the present invention.
FIG. 2 is a three-dimensional schematic structural diagram of a headrest height adjustment mechanism according to the present invention.
FIG. 3 is a cross-sectional view of a headrest height adjustment mechanism according to the present invention.
FIG. 4 is a schematic structural diagram of a headrest support member in a headrest height adjustment mechanism according to the present invention.
FIG. 5 is a schematic structural diagram of a seat back and a headrest support member in a headrest height adjustment mechanism according to the present invention.

In the drawings, the reference numerals respectively represent: 100. seat back; 110. adjustment slot; 120. mounting column; 200. headrest; 210. headrest guide block; 300. headrest support member; 310. seat back top cover; 320. supporting side plate; 330. mounting groove; 331. threaded hole; 340. supporting protrusion; 350. connection end surface; 360. supporting end surface; 370. inclined connection surface; 380. reinforcing rib.

### DETAILED DESCRIPTION OF THE EMBODIMENTS

The present invention will be further described through specific embodiments. It should be noted that the embodiments or technical features described below may be arbitrarily combined to form new embodiments without conflict.

In the description of the present invention, it should be noted that orientation and position relationships indicated by the orientation terms such as "center", "transverse", "longitudinal", "length", "width", "thickness", "on", "below", "front", "rear", "left", "right", "vertical", "horizontal", "top", "bottom", "inner", "outer", "clockwise", and "counterclockwise" are based on the orientation or positional relationships shown in the drawings, and are only for the convenience of describing the present invention and simplifying the description, rather than indicating or implying that the apparatus or element described must have a specific orientation or be constructed and operated in a specific orientation, and therefore are not to be construed as limiting the present invention.

It should be noted that in the specification and claims of the present invention, the terms such as "first" and "second" are intended to distinguish between similar objects but do not indicate a particular order or sequence.

In the specification and claims of the present invention, the terms "include," "comprise," and any other variants thereof are intended to cover a non-exclusive inclusion. For example, a process, method, system, product, or device that includes a list of steps or units is not necessarily limited to those expressly listed steps or units, but may include other steps or units not expressly listed or inherent to such a process, method, product, or device.

A safety seat is a type of seat installed on a family vehicle for a child occupant to ride in. To better ensure the safety of a child occupant in the safety seat, a headrest is generally mounted on the safety seat to better protect the head and the neck of the child occupant. Considering that different children have different heights during the infant and toddler stages and the height and the body shape of a child will also change during growth, the height of the headrest needs to be adjusted according to specific conditions of different children in different stages of growth. However, headrest height adjustment mechanisms in the existing child safety seats inevitably lead to a gap between the headrest and the seat back. As a result, when the vehicle suddenly accelerates or decelerates, the headrest will swing backward relative to the seat back. Especially when the height of the headrest is adjusted to a high level, part of the headrest is higher than the seat back. In this case, once the vehicle suddenly accelerates or decelerates, the headrest will swing backward relative to the seat back more violently, the head and the neck of a child occupant cannot be well supported and protected, and the child occupant is easily injured.

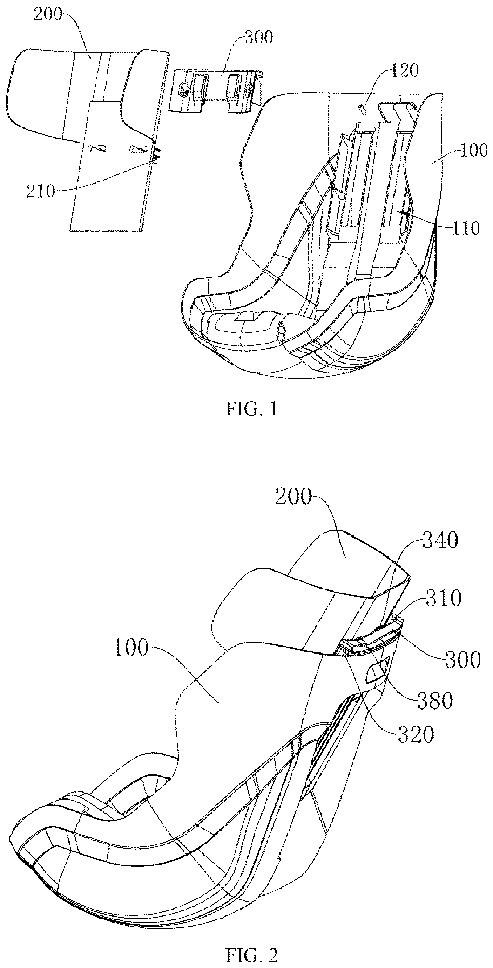

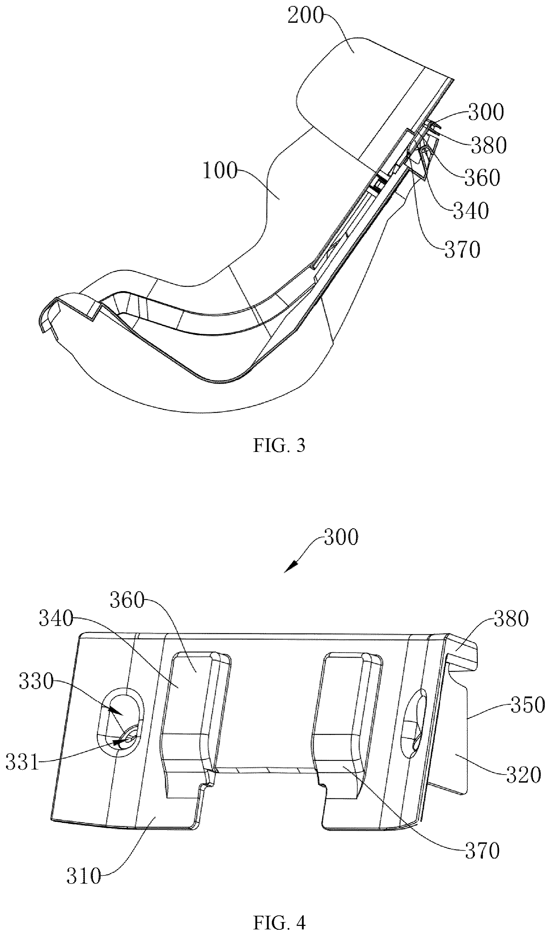

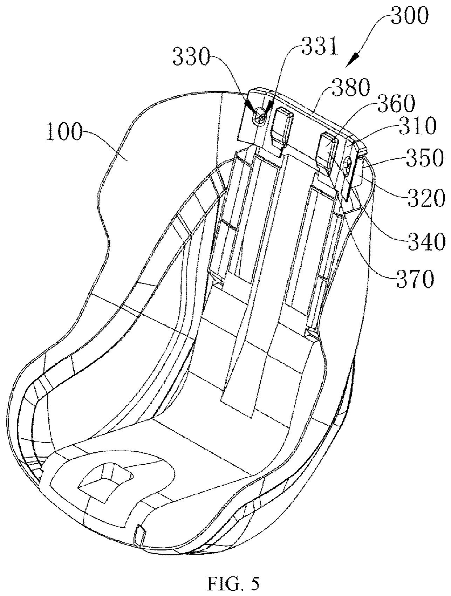

To solve the above problems, as shown in FIG. 1 to FIG. 5, the present invention provides a headrest height adjustment mechanism, which includes a seat back 100 and a headrest 200 arranged on the seat back 100. A headrest support member 300 is further arranged on the seat back 100. The headrest support member 300 is located between the seat back 100 and the headrest 200. The headrest support member 300 includes a connection end surface 350 and a supporting end surface 360 opposite to the connection end surface 350. The connection end surface 350 is configured to press against the seat back 100. The supporting end surface 360 is configured to press against the headrest 200. The headrest support member 300 may support the headrest 200. In other words, the headrest support member 300 may fill a part of a gap between the headrest 200 and the seat back 100, so that at least a part of the headrest 200 always presses against the headrest support member 300 during adjustment of the headrest 200 relative to the seat back 100. The headrest support member 300 is configured to support the headrest 200 to limit the headrest 200 from swinging backward relative to the seat back 100 when the vehicle suddenly accelerates or decelerates, so that the headrest 200 provides good support and protection for the head and the neck of a child occupant to prevent the child occupant from being injured.

Further, the headrest height adjustment mechanism includes a seat back 100 and a headrest 200 arranged on an upper portion of the seat back 100. The seat back 100 is a U-shaped accommodating groove extending in the shape of digit 7. The headrest 200 is arranged at a position in the seat back 100 which corresponds to the head of a child occupant. Considering that the child occupant is in the growth stage, the position of the headrest 200 on the seat back 100 is adjustable to adapt to the heights of children of different ages. Two symmetrical adjustment slots 110 are provided in the seat back 100. The adjustment slots 110 are cuboid slots extending vertically along the seat back 100. Two headrest guide blocks 210 are arranged on the headrest 200. The headrest guide blocks 210 may be implemented as cubic or cuboid slide blocks respectively matching the corresponding adjustment slots 110. The headrest guide blocks 210 are fixed to a bottom of the headrest 200. Positions of the two headrest guide blocks 210 correspond to positions of the adjustment slots 110 respectively. Two side edges of the headrest guide block 210 are fitted within the corresponding adjustment slot 110, and the headrest guide block 210 is slidable in the corresponding adjustment slot 110, to adjust the position of the headrest 200 in the seat back 100. As such, the headrest 200 can be adjusted to different positions in the seat back 100 to adapt to the heads of child occupants of different ages, thereby providing support and protection for the heads of child occupants.

In some embodiments, the headrest support member 300 specifically includes a seat back top cover 310 and supporting side plates 320. Two mounting grooves 330 are provided on a front end surface of the seat back top cover 310. The two mounting grooves 330 are symmetrically arranged on the seat back top cover 310 in a left-right direction. A threaded hole 331 for a bolt to pass through is provided on a bottom of each of the mounting grooves 330. A mounting column 120 configured to engage with the threaded hole 331 is arranged at the upper portion of the seat back 100. An internal thread is provided on the mounting column 120. To mount the seat back top cover 310 to the seat back 100, the threaded hole 331 is aligned with the internal thread, and a mounting bolt may be passed through the threaded hole 331 and then be threadedly connected to the mounting column 120 to mount the seat back top cover 310 to the seat back 100. The supporting side plates 320 are respectively located on a left side and a right side of the seat back top cover 310. A first end of each of the supporting side plates 320 is connected to the seat back top cover 310 by integral molding, so that the supporting side plates 320 are perpendicularly arranged on a rear end surface of the seat back top cover 310. A second end of each of the supporting side plates 320 extends toward the seat back 100. The second end is configured to press against the seat back 100, so that an end surface of the second end forms a connection end surface 350. A shape of the connection end surface 350 matches that of the seat back 100. The connection end surface 350 can fit tightly on the seat back 100, thereby improving the stability of the headrest support member 300 and preventing the headrest support member 300 from shaking when supporting the headrest 200.

Two supporting protrusions 340 are arranged on the front end surface of the seat back top cover 310. The supporting protrusions 340 protrude from the front end surface of the seat back top cover 310 toward the headrest 200. The two supporting protrusions 340 are symmetrically arranged on the seat back top cover 310 in a left-right direction. An end surface of each of the two supporting protrusions 340 forms a supporting end surface 360. The supporting end surface 360 is configured to press against the headrest 200, to enable the headrest support member 300 to support the headrest 200, thereby preventing the headrest 200 from swinging backward when the vehicle suddenly accelerates or decelerates, which otherwise results in the headrest 200 failing to support the head of a child occupant and consequently causes an injury to the head and the neck of the child occupant.

In some preferred embodiments, the supporting protrusion 340 is implemented as a cuboid protruding block, the supporting protrusion 340 extends in a vertical direction of the seat back 100, the supporting protrusion 340 further includes an inclined connection surface 370, the inclined connection surface 370 is arranged below the supporting end surface 360, and two ends of the inclined connection surface 370 are respectively connected to the supporting end surface 360 and the front end surface of the seat back top cover 310, to achieve a smooth connection between the supporting end surface 360 and the front end surface of the seat back top cover 310. Because the seat back 100 is a U-shaped accommodating groove extending in the shape of digit 7, a gap between the headrest 200 and the seat back 100 varies with different height levels to which the headrest 200 is adjusted relative to the seat back 100. The arrangement of the inclined connection surface 370 can ensure that the headrest 200 always presses against the headrest support member 300 regardless of whether the headrest 200 is adjusted to a low or high height level, i.e., ensure that the headrest support member 300 can support the headrest 200 regardless of the height level to which the headrest 200 is adjusted. To be specific, when the headrest 200 is at a low height level, the gap between the headrest 200 and the seat back 100 is small, and a top end of the headrest 200 is configured to press against the inclined connection surface 370; and when the headrest 200 is at a high height level, the gap between the headrest 200 and the seat back 100 is large, and a bottom end of the headrest 200 is configured to press against the supporting end surface 360. The arrangement of the supporting end surface 360 and the inclined connection surface 370 can ensure that the headrest 200 at any height level can be supported by the headrest support 300 while ensuring the smooth sliding of the headrest 200 during adjustment.

It should be noted that a thickness of the supporting protrusion 340 may be determined according to the gap between the headrest 200 and the seat back 100 in an actual child safety seat product, i.e., a height by which the supporting end surface 360 protrudes from the front end surface of the seat back top cover 310 may be determined according to the gap between the headrest 200 and the seat back 100, to prevent the thickness of the supporting protrusion 340 from being too small to result in the headrest support member 300 failing to support the headrest 200, and prevent the thickness of the supporting protrusion 340 from being too large to result in the headrest support member 300 affecting the smooth sliding of the headrest 200 relative to the seat back 100. Generally, the thickness of the supporting protrusion 340 ranges from 3 mm to 20 mm. In embodiments shown in the drawings, the thickness of the supporting protrusion 340 is 10 mm.

Further, a reinforcing rib 380 is arranged on the rear end surface of the seat back top cover 310. The reinforcing rib 380 is arranged at a top of the rear end surface of the seat back top cover 310 and is located above the supporting side plate 320. An upper end surface of the reinforcing rib 380 is even with an upper end surface of the seat back top cover 310. The reinforcing rib 380 extends from a left end surface of the seat back top cover 310 to a right end surface of the seat back top cover 310 in a length direction of the seat back top cover 310. In other words, the reinforcing rib 380 may cover an entire upper edge of the seat back top cover 310. The reinforcing rib 380 is configured to enhance the deformation resistance of the seat back top cover 310.

As shown in FIG. 1, in a specific embodiment, the reinforcing rib 380 has a cuboid structure with a hollow interior, and four side walls of the reinforcing rib 380 extend perpendicularly outward toward the seat back 100. In other words, the arrangement of the reinforcing rib 380 increases the thickness of the upper portion of the seat back top cover 310 and improves the deformation resistance of the seat back top cover 310, and the hollow interior of the reinforcing rib 380 can reduce the weight of the seat back top cover 310 while ensuring the structural strength of the seat back top cover 310.

Specifically, when the headrest support member 300 is mounted on the seat back 100, the seat back top cover 310 is connected to the seat back 100 only through the supporting side plate 320 and the mounting groove 330 which are at a lower portion thereof, and the upper portion of the seat back top cover 310 is higher than the seat back 100 and is not supported by the seat back 100. As a result, when the vehicle suddenly accelerates or decelerates, the seat back top cover 310 is deformed by a reverse force from the headrest 200, and cannot support the headrest 200. The arrangement of the reinforcing rib 380 can enhance the structural strength of the upper edge of the seat back top cover 310, so that the upper edge of the seat back top cover 310 is not easily deformed when subjected to a force. The seat back top cover 310 can support the headrest 200 through the supporting protrusions 340 to limit the headrest 200 from swinging backward when the vehicle suddenly accelerates or decelerates, thereby protecting the neck and head of a child occupant from being injured.

The present invention further provides a safety seat, which includes the headrest height adjustment mechanism described above.

The basic principles, main features, and advantages of the present invention have been described above. Those skilled in the art should understand that the present invention is not limited to the above embodiments. The descriptions of the embodiments and the specification are only for illustrating the principles of the present invention. Various changes and improvements may be made to the present invention without departing from the spirit and scope of the present invention, and such changes and improvements all fall within the scope of protection claimed by the present invention. The scope of protection claimed by the present invention is defined by the appended claims and their equivalents.

## Claims

1. A headrest height adjustment mechanism, **characterized by** comprising a seat back and a headrest adjustably arranged on the seat back, wherein a headrest support member is further arranged on the seat back, the headrest support member is located between the seat back and the headrest, the headrest support member comprises a connection end surface and a supporting end surface opposite to the connection end surface, the connection end surface is configured to press against the seat back, the supporting end surface is configured to press against the headrest, and the headrest support member is configured to limit the headrest from swinging backward relative to the seat back.

2. The headrest height adjustment mechanism according to claim 1, **characterized in that** the headrest support member comprises a seat back top cover, a supporting protrusion is arranged on a front end surface of the seat back top cover, a front end surface of the supporting protrusion protrudes from the front end surface of the seat back top cover to form the supporting end surface, and the supporting end surface is configured to press against a back of the headrest to support the headrest.

3. The headrest height adjustment mechanism according to claim 2, **characterized in that** the supporting protrusion further comprises an inclined connection surface, the inclined connection surface is arranged below the supporting end surface, and two ends of the inclined connection surface are respectively connected to the supporting end surface, and the front end surface of the seat back top cover, to achieve a smooth transition between the supporting end surface and the front end surface of the seat back top cover.

4. The headrest height adjustment mechanism according to claim 3, **characterized in that** two supporting protrusions are arranged on the seat back top cover, the two supporting protrusions are symmetrically arranged on the front end surface of the seat back top cover in a left-right direction, and the two supporting protrusions extend in a vertical direction of the seat back.

5. The headrest height adjustment mechanism according to claim 3, **characterized in that** the headrest support member further comprises a supporting side plate, a first end of the supporting side plate is connected to the seat back top cover by integral molding, the supporting side plate is perpendicularly arranged on a rear end surface of the seat back top cover, a second end of the supporting side plate extends toward the seat back, a rear end surface of the second end portion forms the connection end surface, and the connection end surface is configured to press against the seat back to support the seat back top cover and the supporting protrusion.

6. The headrest height adjustment mechanism according to claim 5, **characterized in that** a mounting groove is provided on the seat back top cover, a threaded hole is provided on a bottom of the mounting groove, a mounting column configured to engage with the mounting groove is arranged on the seat back, an internal thread is provided on the mounting column, and the headrest support member is mounted on the seat back through engagement of a mounting bolt with the threaded hole and the internal thread.

7. The headrest height adjustment mechanism according to claim 5 or 6, **characterized in that** the headrest support member further comprises a reinforcing rib, wherein the reinforcing rib is arranged at a top of the rear end surface of the seat back top cover and is located above the supporting side plate, and the reinforcing rib extends from a left end surface of the seat back top cover to a right end surface of the seat back top cover in a length direction of the seat back top cover.

8. The headrest height adjustment mechanism according to claim 7, **characterized in that** the reinforcing rib has a cuboid structure with a hollow interior, and four side walls of the reinforcing rib extend perpendicularly outward toward the seat back.

9. The headrest height adjustment mechanism according to claim 7, **characterized in that** a spacing between the supporting end surface and the front end surface of the seat back top cover ranges from 3 mm to 20 mm.

10. A safety seat, **characterized by** comprising the headrest height adjustment mechanism according to any one of claims 1 to 9.
